# EUROPÄISCHE PATENTANMELDUNG

(11) **EP 1 048 333 A1**
(43) Veröffentlichungstag der Anmeldung: **02.11.2000**
(21) Anmeldenummer: 99810356.8
(22) Anmeldetag: 27.04.1999
(51) Int. Cl.: B01D 15/08, G01N 30/84

(54) **Vorrichtung und Verfahren zur Derivatisierung**

(71) Anmelder: METROHM AG, 9100 Herisau (CH)
(72) Erfinder: Schäfer, Helwig, Dr., 9101 Herisau (CH)
(74) Vertreter: Hepp, Dieter

(57) **Zusammenfassung**

Die vorliegende Erfindung beschreibt eine Vorrichtung und ein Verfahren zur Derivatisierung in der Flüssigkeitschromatographie. Durch ein der Trennsäule (7) nachgeordnetes Reagenzfreisetzungssystem (9) können die zur Derivatisierung notwendigen Reagenzien sehr selektiv dem die Trennsäule (7) verlassenden Eluentenstrom zugesetzt werden. Zusätzlich kann durch die entsprechende Geometrie des Durchflusskanals (19) im Reagenzfreisetzungssystem auf eine Misch- und Reaktionskammer verzichtet werden. Im Vergleich mit dem Stand der Technik wird auf diese Weise die Verbreiterung und Abflachung der Substanzsignale im nachgeschalteten Detektor (13) vermieden.

## Beschreibung

Die vorliegende Erfindung betrifft eine Vorrichtung zur Derivatisierung und die Verwendung von Reagenzfreisetzungssystemen gemäss den Oberbegriffen der unabhängigen Patentansprüche.

Reagenzfreisetzungssysteme sind seit längerer Zeit in verschiedenen Ausführungsformen bekannt. Generell bestehen Reagenzfreisetzungssysteme aus einer Vorrichtung, in der ein Donatormedium mittels einer Membran von einem Akzeptormedium getrennt wird. Das Donatormedium besteht aus mindestens einem Lösemittel, insbesondere einem Lösemittel und ein oder mehreren darin gelösten Stoffen. Das Akzeptormedium besteht im allgemeinen nur aus einem Lösemittel. Während das Akzeptormedium an der einen, ersten Membranseite vorbeifliesst, ist die andere, zweite Seite der Membran mit dem Donatormedium beaufschlagt. Das in der Offenlegungsschrift DE 197 15 322.4 vorgeschlagene Reagenzfreisetzungssystem sieht zur Aufnahme des Donatormediums ein zur zweiten Membranseite hin offenen, bevorzugt kegelförmigen Behälter vor.

Aufgrund des Konzentrationsgradienten, der bezüglich der gelösten Substanz zwischen Donator- und Akzeptormedium besteht, kommt es - abhängig von Membrantypus - zum selektiven Übergang der gelösten Substanz oder Substanzen aus dem Donator- in das Akzeptormedium. Der Übergang durch die Membran ist ein diffusionskontrollierter Vorgang. Die pro Zeiteinheit übergehende Menge an freizusetzender Substanz ist neben der Diffusionsgeschwindigkeit der Substanz durch die Membran unter anderem weiterhin abhängig von der Fliessgeschwindigkeit des Akzeptormediums und von der zur Verfügung stehenden Austauschfläche der Membran. Die Diffusionsgeschwindigkeit einer in einem Lösemittel gelösten Substanz ist wiederum neben substanzspezifischen Eigenschaften, wie zum Beispiel der Wanderungsgeschwindigkeit solvatisierter Ionen weiterhin vom Membranmaterial und der Membrandicke abhängig. In DE'322.4 wird die Konzentration der aus dem Donatormedium freizusetzenden Substanz in einer Ausführungsform durch eine mittels austauschbarer Blenden veränderbaren Membranfläche eingestellt.

Die Derivatisierung ist in der Chemie ein seit langer Zeit anerkanntes Verfahren, bei der mit einem vorhandenen Detektor nicht nachweisbare Substanzen durch chemische Reaktion mit zugesetzten Reagenzien in nachweisbare Verbindungen überführt werden. Allgemein ist unter dem Begriff Derivatisierung die Umwandlung chemischer Verbindungen in bestimmte Abkömmlinge dieser Verbindung zu verstehen. Die Derivate werden häufig in nur einem Reaktionsschritt gebildet und stehen zur ursprünglichen Verbindung in engem chemischen Verwandtschaftsgrad. Derivatisierungsreaktionen spielen in allen Arten der Analytik eine bedeutende Rolle, insbesondere in der Flüssigkeitschromatographie.

Im Stand der Technik wird in der Flüssigkeitschromatographie dazu nach erfolgter Auftrennung des Substanzgemisches mittels einer Trennsäule dem die Trennsäule verlassenden Eluentenstrom eine Reagenzlösung zugesetzt. Das Reagens ist in der Lage mit einigen Substanzen eine chemische Reaktion einzugehen. Nach der Reaktion ist die entsprechende Substanz qualitativ und nach Kalibrierung auch quantitativ von einem geeigneten Detektor nachweisbar. So können z.B. Substanzen in fluoreszierende Verbindung überführt werden, die mittels eines Fluoreszensdetektors nachweisbar sind.

Nachteil der bisherigen Verfahren ist jedoch, dass das Reagens als Lösung dem Eluentenstrom nach der Trennsäule zugeführt werden muss, was eine Verdünnung der Eluenten bewirkt. Nach Zugabe und Mischen ist darüberhinaus noch ein Reaktionsbereich notwendig, um sicherzustellen, dass die Reaktion vor Eintritt in den Detektor abgeschlossen ist. Das Verdünnen, Mischen und der zusätzliche Reaktionsbereich verschlechtern die Qualität der Chromatogramme, was sich in einer erheblichen Verbreiterung und Abflachen der Substanzsignale im nachfolgenden Detektor niederschlägt.

Aufgabe der vorliegenden Erfindung ist es, die Nachteile des Standes der Technik zu vermeiden.

Insbesondere soll eine Vorrichtung und ein Verfahren zur Derivatisierung von Substanzen bereitgestellt werden.

Weiterhin soll die Derivatisierung in der Flüssigkeitschromatographie in einer Art verwirklicht werden, die keine bzw. nur eine unwesentliche Verbreiterung der Substanzsignale nach der Derivatisierung zur Folge hat.

Eine weitere Aufgabe besteht darin, Vorrichtungen für die Derivatisierung in der Flüssigkeitschromatographie so zu gestalten, welche eine Mischkammer überflüssig macht.

Die Lösung dieser Aufgabe wird erreicht durch die Merkmale der unabhängigen Ansprüche 1 und 15.

Insbesondere wird sie erreicht durch die Verwendung eines Reagenzfreisetzungssystems, welches eine Membran umfasst, welche ein Akzeptor- von einem Donatormedium trennt, zur Derivatisierung von Substanzen. Die Substanzen können dabei einzeln, weitestgehend aufgetrennt, z.B.in einem Eluentenstrom vorliegen oder als Substanz in einem Gemisch auftreten. Bei letzterer Variante können durch Derivatisierung selektiv einzelne Substanzen in diesem Gemisch analysierbar werden.

In einer bevorzugten Ausführungsform wird die Lösung erreicht durch eine Vorrichtung zur Derivatisierung in Trenn- und Analysevorrichtungen, insbesondere in der Flüssigkeitschromatographie, welche wenigstens ein Mittel zum Abtrennen wenigstens einer Substanz aus einem zu trennenden Substanzgemisch und wenigstens ein Reagenzfreisetzungssystem enthält. Erfindungsgemäss ist das Reagenzfreisetzungssystem dem Mittel zum Abtrennen einer Substanz aus einem Substanzgemisch nachgeordnet.

In der Regel sind die Mittel zum Abtrennen wenigstens einer Substanz aus einem Substanzgemisch in der Flüssigkeitschromatographie durch Trennsäulen realisiert. Die Säule wird mit einem Stoff gefüllt bzw. beschichtet (stationäre Phase), durch welche in Kombination mit entsprechenden Elutionsmitteln (mobile Phase) eine Trennung des Substanzgemisches aufgrund unterschiedlicher chemischer und physikalischer Wechselwirkungen herbeigeführt wird. Die Technik, Herstellung, Anwendung und Materialien der Mittel zum Abtrennen einer Substanz aus einem Substanzgemisch sind vor allem bei den verschiedensten Arten der Flüssigkeitschromatographie (Säulenchromatographie, Ionenchromatographie, Gelchromatographie, HPLC, RP-HPLC, etc.) seit langem bekannt. Es wird an dieser Stelle auf die entsprechende Literatur verwiesen.

Abtrennung kann auch unter Einsatz z.B. von Membran- und Filter-Technologie, das Anlegen elektrischer oder magnetischer Felder und sonstige bekannte Abtrenntechniken erreicht werden.

Das Detektionsmittel ist auf die nachzuweisende Substanz abzustimmen. Das Reagenzfreisetzungssystem ist bezüglich seines Aufbaues bereits beschrieben worden. Generell ist jede Art von Reagenzfreisetzungssystem in der vorliegenden Erfindung anwendbar.

In einem bevorzugten Ausführungsbeispiel wird die sich im Akzeptormedium einstellende Konzentration durch ein Absperrorgan und ein Mittel zum Bewegen des Absperrorgans eingestellt, wobei das Absperrorgan in vorbestimmbaren Intervallen zwischen einer ersten und einer zweiten Position bewegbar ist. Ganz allgemein unterscheiden sich die erste und zweite Position durch die Breite der Öffnung des Absperrorgans. Die erste Position entspricht in der Regel der Schliessstellung während die zweite Position einer Offenstellung entspricht. Die Offenstellung kann der Grösse der gesamten Membran entsprechen oder aber nur einen Teil der Membran freigeben. In weiteren Ausführungsformen können zusätzlich Blenden angeordnet werden.

Das Absperrorgan ist wenigstens auf einer der beiden Membranseiten angeordnet, sodass es diese auf die beschriebene Weise zeitweise vom beaufschlagten bzw. vorbeigeführten Medium abtrennt. Wesentlich ist dabei, dass die Absperrvorrichtung, wenn in Schliessstellung, dicht abschliesst und dass das Totvolumen möglichst klein ist. Das Totvolumen ist das Volumen, das zwischen erster Membranseite und Absperrvorrichtung ausgebildet wird, wenn die Absperrvorrichtung auf der Akzeptorseite angebracht ist. Das Verhältnis der Dauer der Schliessstellung zur Dauer der Offenstellung ist in einem weiten Bereich veränderbar. Im Falle einer Herstellung von homogener Lösungen muss das Verhältnis dabei so eingestellt werden, dass mittels der Diffusionsgeschwindigkeit der freigesetzten Substanz im Akzeptormedium und der Fliessgeschwindigkeit und -verhalten des Akzeptormediums noch eine homogene Verteilung, d.h. Konzentration der freigesetzten Substanz im Akzeptormedium gewährleistet ist. In einer weiteren Ausführungsform kann eine homogene Verteilung auch durch dem RF-System bzw. Systemen nachgeschaltete Mischkammer erreicht werden.

Die Konzentrationseinstellung des Akzeptormediums über das Verhältnis der Schliessdauer zur Dauer der Offenstellung des Absperrorgans ermöglicht eine problemlose Ansteuerung durch Computer. Damit sind die Voraussetzungen geschaffen, das Reagenzfreisetzungssystemen in Vorrichtungen jeglicher Art zu integrieren. Eine Möglichkeit des Einsatzes besteht in der Verwendung der Reagenzfreisetzungssysteme in Vorrichtungen zur Flüssigkeitschromatographie zur Eluenten-Generierung.

In einer Ausführungsform der Erfindung ist das Absperrorgan in Form zweier Scheiben mit je mindestens einer Durchlassöffnung ausgebildet. Die Scheiben sind derart relativ zueinander verlagerbar, dass die Durchlassöffnung zum Durchlassen der freizusetzenden Substanz wenigstens teilsweise fluchten

Unter dem Begriff "Lösemittel" sollen im weitesten Sinne alle Stoffe verstanden werden, die andere Stoffe zur Lösung bringen können. Im engeren Sinne sind darunter organische und anorganische Flüssigkeiten zu verstehen, die andere gasförmige, flüssige oder feste Stoffe zu lösen vermögen. Besteht das Donatormedium nur aus Lösemittel, so ist dieses die freizusetzende Substanz bei geeigneter Membran. In der Regel werden jedoch die im Lösemittel gelösten Stoffe durch die Membran freigesetzt.

Das Reagenzfreisetzungssystem ermöglicht selektive Freisetzungen von Reagenzien. Die Selektivität der Membran ist durch den Porendurchmesser bzw. ihrem physikalischen und chemischen Aufbau bzw. Zusammensetzung einstellbar. Somit kann jede in einem Lösemittel gelöste anorganische oder organische Substanz weitgehend selektiv dem Akzeptormedium zugesetzt werden. Besonders geeignet zum Zusetzen von ionischen Feststoffen und anorganischen Ionen z.B. wie Natriumcarbonat und Natriumhydroxid hat sich die Dialysemembran Cellu Sep 93 der Firma Membrane Filtration Products, Texas, USA mit einem molecular weight cut-off von nominal 12'000 erwiesen. Mit dem der Trennsäule nachgeordneten Reagenzfreisetzungssystem werden somit nur die im Donatormedium gelösten Ionen oder Moleküle, die für die Derivatisierungsreaktion benötigt werden, dem Akzeptorstrom zugeführt. Lösemittel tritt nicht durch die Membran. Die Ionen oder Moleküle können jedoch je nach chemischer Wechselwirkung durchaus eine Solvatisierungshülle besitzen. Der Akzeptorstrom entspricht im wesentlichen dem Eluentenstrom aus der Trennsäule. Durch den selektiven Zusatz nur der gewünschten Ionen oder Moleküle wird eine Verbreiterung der Substanzsignale durch ausgeprägte Verdünnungseffekte vermieden. Die Qualität der Chromatogramme wird dadurch erheblich gesteigert. Da die Ionen- und/oder Molekülkonzentration sich durch die alleinige Diffusion der Ionen und/oder Moleküle, jedoch nicht des Lösemittels, über die Zeit verringern würde, wird um diesem Effekt vorzubeugen, je nach Anwendung mit
- einem grossen Volumen des Donatormediums gearbeitet oder
- mit gesättigten Lösungen mit Anteilen an ungelöster Substanz; der zu lösende bzw. gelöste Stoff wird dem oder den Lösemitteln im Donatormedium in einer solchen Menge zugesetzt, dass eine nicht gelöste Menge der Substanz als Bodenkörper verbleibt. Eine Abreicherung der zugesetzten zu lösenden bzw. gelösten Substanz wird erst dann stattfinden, wenn der Bodenkörper sich vollständig aufgelöst hat.

Da die Löslichkeit des Bodenkörpers temperaturabhängig ist, wird das Donatormedium bei grossen Temperaturschwankungen gegebenenfalls thermostatisiert.

In einer weiteren Ausführungsform wird die gesättigte Lösung mit Bodenkörper durch Zugabe von Verdickungsmitteln, vorteilhaft Xylose oder Kieselgel, in eine viskose Flüssigkeit überführt. Die Viskosität muss so hoch sein, dass das Absetzen des Bodenkörpers verhindert wird, damit die Funktionalität der Membran nicht beeinträchtigt wird.

Die Geometrie der Durchflussvorrichtung an der ersten Membranseite wird so eingestellt bzw. ist so einstellbar, dass die aus dem Donatormedium freigesetzte Substanz und das an der Membranseite vorbeigeführte Akzeptormedium bei Erreichen des Einlasses des nachgeschalteten Detektionsmittels im wesentlichen homogen vermischt sind und reagiert haben. Dies wird erfindungsgemäss durch eine Durchflussvorrichtung verwirklicht die einen engen Durchlassspalt oder Durchlassquerschnitt im Bereich der Membran aufweist. In einer speziellen Ausführungsform ist die Durchflussvorrichtung in Form eines Kanals ausgebildet, dessen Durchmesser in einem Bereich von 0,2 bis 2 mm liegt. Die Membran halbiert den ansonsten kreisförmigen Kanal, sodass der Kanal im Bereich der Membranfläche im Querschnitt nur noch einem Halbkreis entspricht. Der Kanal kann jedoch auch einen rechteckigen Querschnitt haben mit einer y-Achse (Höhe) im Bereich von 0,01 bis 1 mm und einer x-Achse (Breite) im Bereich von 0,2 bis 5 mm. Ovale bzw. ellipsenförmige bzw. im Bereich der Membranfläche halben Ovale bzw. halben Ellipsen entsprechende Kanalquerschnitte sind weitere Ausführungsformen. Durch eine solche Geometrie kann auf eine zusätzliche Misch- und Reaktionskammer verzichtet werden, was einer Verbreiterung und Abflachung der Substanzsignale im nachfolgenden Detektor zusätzlich entgegenwirkt.

Durch die erfindungsgemässe Vorrichtung wird der die Substanz enthaltende Abschnitt des Akzeptormediums im Bereich zwischen der Membranfläche und dem Eingang in das zweite Detektionsmittel lediglich derart vergrössert, dass die daraus resultierende Zunahme der Halbwertsbreite des Substanzsignals im zweiten Detektionsmittel weniger als 20%, bevorzugt zwischen 0,5 und 5% und noch bevorzugter zwischen 1 und 4% ausmacht.

Die Möglichkeit der Unterbrechung des Austausches zwischen Donator- und Akzeptormedium durch ein Absperrorgan erlaubt eine Zugabe des gewünschten Reagens bei Bedarf. Dadurch ist ein sparsamer Umgang mit den Chemikalien gewährleistet.

Vorzugsweise bei bekannten Retentionszeiten z.B. bei Analysen zur Qualitätsüberprüfungen, ist eine weitgehende Automatisierung der Derivatisierung durch Computersteuerung realisierbar.

In einer besonderen Ausführungsform befindet sich vor dem Reagenzfreisetzungssystem ein erstes Detektionsmittel. Somit können Substanzen des zu analysierenden Substanzgemisches, welche keine Derivatisierung benötigen, unmittelbar nach der Trennsäule nachgewiesen werden. Nach dem Reagenzfreisetzungssystem befindet sich ein zweites Detektionsmittel, für den Nachweis der derivatisierten Substanzen.

Das Verfahren zur Derivatisierung von Substanzen mit der erfindungsgemässen Vorrichtung sieht vor,
(a) ein zu trennendes flüssiges Substanzgemisch auf wenigstens ein Mittel zum Abtrennen wenigstens einer Substanz, insbesondere einer Trennsäule aufzubringen,
(b) wenigstens eine Substanz des zu trennenden Substanzgemisches in der Trennsäule im wesentlichen von den anderen Substanzen abzutrennen und durch mindestens ein Elutionsmittel aus der Trennsäule auszutragen,
(c) gegebenenfalls die Substanzen nach Austrag aus der Trennsäule durch ein erstes Detektionsmittel nachzuweisen,
(d) dem aus der Trennsäule, gegebenenfalls aus dem ersten Detektionsmittel, ausgetragenen Flüssigkeitsstrom beim Passieren der ersten Membranseite des Reagenzfreisetzungssystems eine vorbestimmbare Menge eines freizusetzenden Reagens aus dem Donatormedium zuzuführen und dadurch wenigstens eine der Substanzen im Akzeptorstrom durch chemische Reaktion strukturell derart zu verändern.

Ausführungsbeispiele der Erfindung werden nachstehend anhand der Zeichnungen erläutert:
- Figur 1: einen schematischen Querschnitt einer Ausführungsform der erfindungsgemässen Vorrichtung zur Derivatisierung in der Flüssigkeitschromatographie,
- Figur 2: in grösserem Massstab einen schematischen Schnitt durch den die Membran enthaltende Teil eines Reagenzfreisetzungssystems mit in Schliessstellung befindlichem Absperrorgan,
- Figur 3: einen gleichen Schnitt wie in Figur 2 mit in Offenstellung befindlichem Absperrorgan,
- Figur 4: eine alternative Ausführungsform eines in Offenstellung befindlichen Absperrorgans, und
- Figur 5: zeigt das in Figur 4 gezeigte Absperrorgan in Schliessstellung.

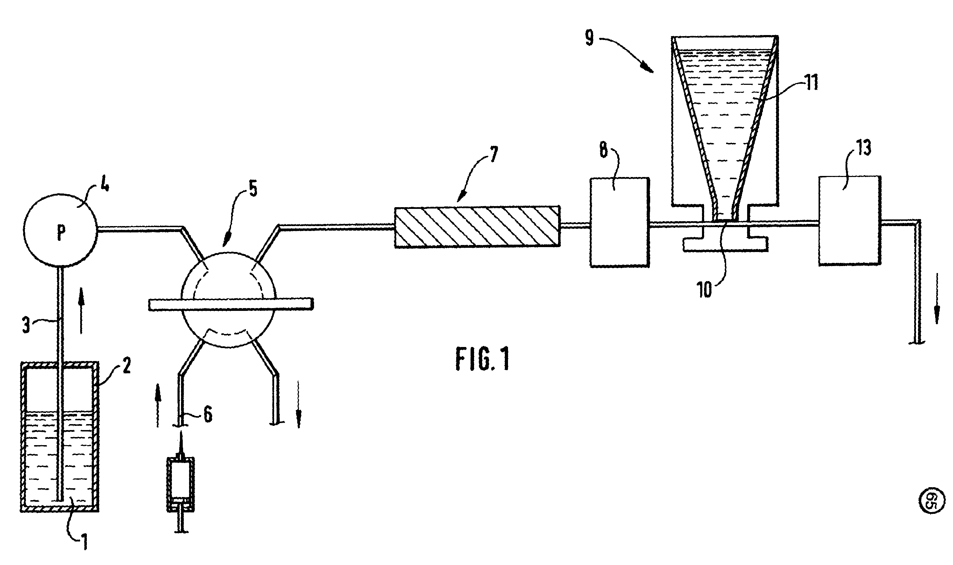

In der Vorrichtung gemäss Figur 1 wird ein Eluent 1, welcher z.B. aus Wasser und darin gelöstem Natriumhydroxid besteht aus einem Vorratsbehälter 2 durch eine Leitung 3 von einer Pumpe 4 angesaugt und der Probenaufgabeeinrichtung 5 zugeführt. Die Probenaufgabeeinrichtung 5 ist in Form eines Mehrwegventils ausgeführt. Eine zu analysierende Probe wird der Einrichtung 5 durch eine Leitung 6 durch eine nicht gezeigte Ventilstellung zugeführt. Dann wird die Einrichtung 5 in die gezeigte Ventilposition gebracht, in welcher der Eluent 1 die Probe, welche aus einem zu trennenden Substanzgemisch besteht, auf eine Trennsäule 7 aufbringt.

Entsprechend der Wechselwirkungen zwischen stationärer Phase und der im Substanzgemisch enthaltenden Substanzen erfolgt eine Auftrennung des Substanzgemisches durch die Trennsäule abhängig von der jeweiligen Elutionskraft des Eluenten 1. Die Elutionskraft von Eluenten steigt z.B. mit zunehmender Konzentration von Salzen in einem Lösemittel oder je nach stationärer Phase mit dem Wechsel von unpolaren zu polaren Elutionsmitteln bzw. umgekehrt. Sehr komplex zusammengesetzte Substanzgemische werden mit einer feinabgestuften Variation verschiedener Elutionsmittel aufgetrennt und selektiv nacheinander aus der Trennsäule 7 ausgetragen. In der in Figur 1 gezeigten Anlage einer Flüssigkeitschromatographie gelangen die ausgewaschenen Substanzen gelöst im jeweiligen Elutionsmittel nach der Trennsäule 7 in einen ersten Detektor 8, mit dem ein Teil der Substanzen aus dem Substanzgemisch nachweisbar sind. Nach Austritt aus dem ersten Detektor 8 gelangt der Elutionsstrom in ein Reagenzfreisetzungssystem 9. Das Reagenzfreisetzungssystem 9 umfasst eine Membran 10, die auf ihrer ersten Seite von dem vom Detektor 8 kommenden Elutionsstrom, dem Akzeptormedium, passiert wird. Auf ihrer zweiten Seite befindet sich ein Donatormedium 11 in einem bevorzugt kegelförmigen Behälter 12. Der Behälter 12 kann auch jede andere als die gezeigte Geometrie besitzen. Alternativ wird das Donatormedium 11 ebenfalls an der Membran 10 vorbeigeführt. Das Donatormedium besteht aus mindestens einem Lösemittel wie z.B. Wasser oder Methanol und gegebenenfalls darin gelösten Molekülen oder Ionen. Während das Akzeptormedium die Membran 10 auf der ersten Membranseite passiert, wird aus dem Donatormedium 11 selektiv die Moleküle bzw. Ionen in das Akzeptormedium freigesetzt. Die Konzentration des freigesetzten Moleküls im Akzeptorstrom kann z.B. durch die Konzentration im Donatormedium 11 oder durch die Grösse der Membranfläche 10 geregelt werden. Durch die Geometrie des Durchflusskanals für das Akzeptormedium ist eine homogene Mischung bzw. homogene Reaktion zwischen der durch die Trennsäule abgetrennten Substanz und dem aus dem Donatormedium 11 freigesetzten Reagens bis zum Erreichen des zweiten Detektors 13 gewährleistet. Eine Mischkammer bzw. Reaktionszone zur Gewährleistung einer Reaktion zwischen Reagens und abgetrennter Substanz ist bei der erfindungsgemässen Vorrichtung nicht notwendig. Die erfindungsgemässe Vorrichtung ermöglicht somit trotz Derivatisierung Chromatogramme im Detektor 13 mit ausgeprägten Signalen.

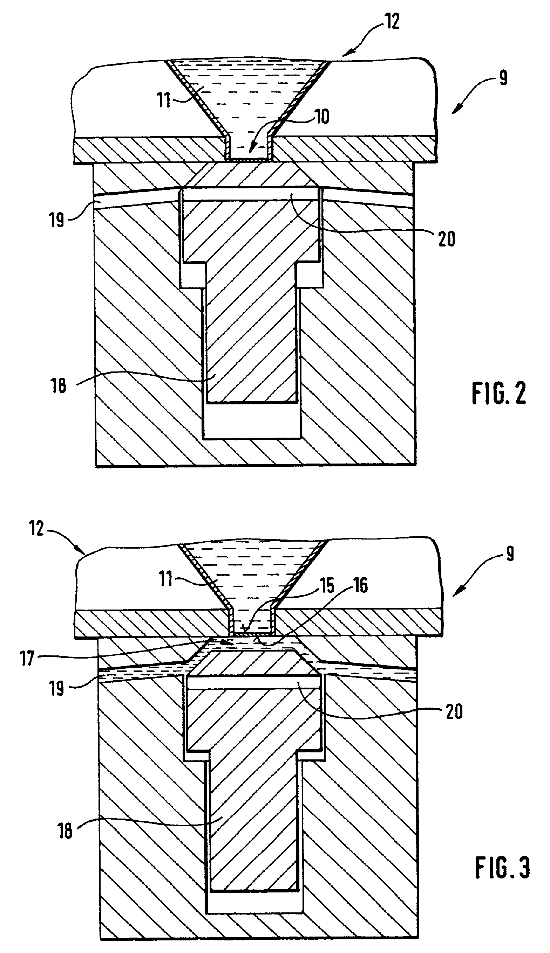

Figur 2 und Figur 3 zeigen eine Ausführungsform des in der erfindungsgemässen Vorrichtung verwirklichten Reagenzfreisetzungssystems 9. Dieses umfasst eine Membran 10, auf deren zweiten Seite 15 das Donatormedium 11 in einem kegelförmigen Ansatz ausgebildeten Behälter 12 aufgenommen ist. An der ersten Membranseite 16 ist das Akzeptormedium 17 vorbeiführbar. Das Akzeptormedium 17 kann durch einen Stempel 18 vom Austausch mit dem Donatormedium 11, d.h. vom Kontakt mit der Membran 10 abgetrennt werden. Figur 2 zeigt die Position des Stempels 18, in der der Austausch zwischen Donatormedium 11 und Akzeptormedium 17 unterbrochen ist, d.h. er befindet sich in der Schliessstellung. Das Absperrorgan in Form des gezeigten Stempels 18 wird mit einem nicht gezeigten Mittel angetrieben. In der Schliessstellung liegt der Stempel 18 mit seiner Stirnseite an der Membran 10 an und verhindert so den Durchtritt der freizusetzenden Substanz in das Innere des Kanals 19. Gleichzeitig bildet in dieser Stellung eine im Stempel 18 enthaltene Bohrung 20 einen Abschnitt der Leitung 19, sodass der von der Trennsäule 7 bzw. dem ersten Detektor 8 kommende Eluentenstrom durch die Leitung 19 hindurchtreten kann. In dieser Position des Stempels 18 findet keine Derivatisierung der sich im Eluentenstrom befindenden Substanz statt. In der Offenstellung (Figur 3) ist der Stempel 18 von der Membran 10 zurückgezogen, sodass der durch die Leitung 19 strömende von der Trennsäule 7 kommende Eluentenstrom (Akzeptormedium 17) mit dem Donatormedium 11 über die Membran 10 in der Weise in Kontakt treten kann, dass das im Donatormedium 11 gelöste Reagens durch die Membran in das Akzeptormedium 17 freigegeben wird. Aus Figur 3 ist ersichtlich, dass der Durchflusskanal 19 je nach Stellung des Stempels 18 im Reagenzfreisetzungssystem in seiner Dimension veränderbar ist bzw. eingestellt werden kann. Selbstverständlich ist auch jede andere für diesen Zweck geeignete Form des Absperrorgans für die erfindungsgemässe Vorrichtung einsetzbar.

Reagenzfreisetzungssysteme können zusätzlich in der erfindungsgemässen Vorrichtung auch zur Generierung des Eluenten vor der Trennsäule bzw. vor der Probenaufgabeeinrichtung angeordnet sein.

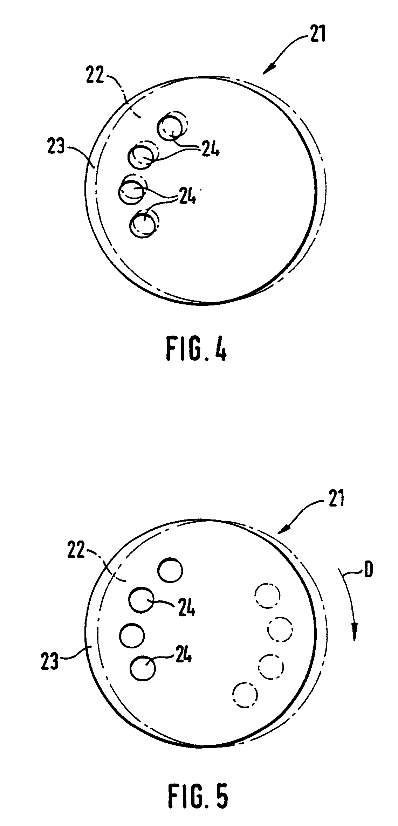

Figur 4 und 5 zeigen eine alternative Ausführungsform eines Absperrorgans in Figur 4 in Offenstellung und in Figur 5 in Schliessstellung. Das Absperrorgan ist in Form eines rotierenden Systems 21 ausgebildet. Die Scheiben 22, 23 befinden sich auf einer der beiden Membranseiten 15, 16. Die Löcher 24 haben eine Durchmesser von 0,2 bis 2 mm. Durch Drehen in Richtung D einer der beiden Scheiben, bevorzugt derjenigen an der das Akzeptormedium vorbeigeführt wird, werden die Löcher 24 geschlossen, bis nach einem Drehwinkel von 180° alle Löcher 24 geschlossen sind. Durch Zurückdrehen werden die Löcher 24 wieder geöffnet.

## Patentansprüche

1. Vorrichtung zur Derivatisierung insbesondere in der Flüssigkeitschromatographie, enthaltend wenigstens ein Mittel zum Abtrennen von wenigstens einer Substanz aus einem Substanzgemisch, insbesondere wenigstens einer Trennsäule (7), und wenigstens einem Reagenzfreisetzungssystem (9), umfassend eine Membran (10), an deren einen ersten Membranseite (16) ein Akzeptormedium (17), enthaltend wenigstens ein Lösemittel in einer Durchflussvorrichtung (19) vorbeiführbar ist, und deren andere zweite Membranseite (15) mit einem Donatormedium (11), enthaltend wenigstens ein Lösemittel, insbesondere wenigstens ein Lösemittel und wenigstens eine gelöste Substanz, beaufschlagbar ist, dadurch gekennzeichnet, dass das Reagenzfreisetzungssystem (9) dem Mittel zum Abtrennen von wenigstens einer Substanz aus einem Substanzgemisch, insbesondere der Trennsäule (7) nachgeschaltet ist.

2. Vorrichtung gemäss Anspruch 1, dadurch gekennzeichnet, dass zusätzlich mindestens ein Detektionsmittel (13) enthalten ist, welches dem Reagenzfreisetzungssystem (9) nachgeordnet ist.

3. Vorrichtung gemäss Anspruch 1 oder 2, dadurch gekennzeichnet, dass dem Reagenzfreisetzungssystem (9) wenigstens ein zweites Detektionsmittel (8) vorgeordnet ist.

4. Vorrichtung gemäss einem der Ansprüche 1 bis 3, dadurch gekennzeichnet, dass das Akzeptormedium (17) einem aus der Trennsäule (7) kommenden Eluentenstrom entspricht.

5. Vorrichtung gemäss einem der Ansprüche 1 bis 4, dadurch gekennzeichnet, dass das Reagenzfreisetzungssystem (9) zusätzlich mindestens ein Absperrorgan (8) und mindestens ein Mittel zum Bewegen des Absperrorgans aufweist, dadurch gekennzeichnet, dass wenigstens eine der beiden Membranseiten (15, 16) mit dem Absperrorgan (18) vom beaufschlagten Medium abtrennbar ist, und dass das Absperrorgan (18) zwischen mindestens einer ersten und mindestens einer zweiten Position umschaltbar ist.

6. Vorrichtung gemäss Anspruch 5, dadurch gekennzeichnet, dass das Absperrorgan (18) zwei Scheiben (22, 23) aufweist, die je wenigstens eine Durchlassöffnung aufweisen, und dass die Scheiben (22, 23) derart relativ zueinander verlagerbar sind, dass die Durchlassöffnungen zum Durchlass der freizusetzenden Substanz wenigstens teilweise miteinander fluchten.

7. Vorrichtung gemäss Anspruch 6, dadurch gekennzeichnet, dass beide Scheiben (22, 23) in einem Kreissegment kleiner 180°, bevorzugt kleiner 120°, Löcher (24) enthalten, welche durch Drehung (D) wenigstens einer der beiden Scheiben (22, 23) in Deckung und somit in Offenstellung bringbar sind.

8. Vorrichtung gemäss Anspruch 5, dadurch gekennzeichnet, dass das Absperrorgan (8,18) ein Stempel ist und die erste Position einer Offenstellung und die zweite Position einer Schliessstellung entspricht.

9. Vorrichtung gemäss einem der Ansprüch 1 bis 8, dadurch gekennzeichnet, dass die Geometrie der Durchflussvorrichtung (19) für das Akzeptormedium (17) im Reagenzfreisetzungssystem (9) so eingestellt oder einstellbar ist, dass die aus dem Donatormedium (11) freigesetzte Substanz und das an der Membranseite (16) vorbeigeführte Akzeptormedium (17) bei Erreichen des Einlasses des dem Reagenzfreisetzungssystems (9) nachgeschalteten Detektionsmittels (13) im wesentlichen homogen vermischt sind.

10. Vorrichtung gemäss einem der Ansprüch 1 bis 9, dadurch gekennzeichnet, dass die Durchflussvorrichtung (19) im Querschnitt als Halbkreis oder als halbe Ellipse ausgebildet ist und entlang der Membranfläche eine Breite im Bereich von 0,2 bis 2 mm aufweist.

11. Verfahren zur Derivatisierung von Substanzen in Vorrichtungen gemäss einem der Ansprüche 1 bis 10, wobei
(a) ein zu trennendes flüssiges Substanzgemisch auf wenigstens ein Mittel zum Abtrennen von wenigstens einer Substanz aus einem zu trennenden Substanzgemisch (7), insbesondere einer Trennsäule (7), aufgebracht wird;
(b) wenigstens eine Komponente des zu trennenden Gemisches im wesentlichen von den anderen Komponenten durch mindestens ein Elutionsmittel abgetrennt und aus der Trennsäule (7) ausgetragen wird;
(c) gegebenfalls eine oder mehrere Substanzen nach Austrag aus der Trennsäule (7) durch ein erstes Detektionsmittel (8) nachgewiesen werden;
(d) dem aus der Trennsäule (7), gegebenfalls aus dem ersten Detektionsmittel (8) ausgetragene Eluentenstrom als Akzeptormedium (17) beim Passieren der ersten Membranseite (16) im Reagenzfreisetzungssystem (9) eine vorbestimmbare Menge eines freizusetzenden Reagens aus dem Donatormedium (11) zugeführt wird, um dadurch wenigstens eine der Substanzen im Akzeptorstrom (17) strukturell zu verändern.

12. Verfahren gemäss Anspruch 11, dadurch gekennzeichnet, dass das freizusetzende Reagens dem Lösemittel im Donatormedium (11) in einer solchen Menge zugesetzt wird, dass eine nicht gelöste Menge des Reagens als Bodenkörper verbleibt.

13. Verfahren gemäss Anspruch 12, dadurch gekennzeichnet, dass das Donatormedium (11) mittels Quellmittel in einen viskosen Zustand überführt wird, wodurch ein Absetzen des ungelösten Reagens im wesentlichen verhindert wird.

14. Verfahren gemäss einem der Ansprüche 11 bis 13, dadurch gekennzeichnet, dass der die zu detektierende Substanz enthaltende Bereich des Akzeptormedium (17) im Bereich zwischen der Membran (10) des Reagenzfreisetzungssystems (9) und dem Eingang des Detektionsmittels (13) eine derarte Vergrösserung erfährt, dass die daraus resultierende Zunahme der Halbwertsbreite des Substanzsignals im zweiten Detektionsmittel (13) weniger als 20% beträgt, bevorzugt in einem Bereich zwischen 0,5 und 5% und noch bevorzugter zwischen 1 und 4% liegt.

15. Verwendung eines Reagenzfreisetzungssystems (9) zur Derivatisierung von Substanzen, umfassend eine Membran (10), welche ein Donatormedium (11) enthaltend wenigstens ein Lösemittel, insbesondere wenigsten ein Lösemittel und wenigstens eine gelöste Substanz von einem Akzeptormedium (17) enthaltend wenigstens ein Lösemittel trennt.
